# EUROPEAN PATENT SPECIFICATION

(11) **EP 1 262 676 B1**
(45) Date of publication and mention of the grant of the patent: **15.06.2005**
(21) Application number: 02253792.2
(22) Date of filing: 30.05.2002
(51) Int. Cl.: F16C 25/06, F16C 41/04

(54) **Force amplification mechanism**
Kraftverstärkungsmechanismus
Mécanisme d'amplification de force

(30) Priority: 31.05.2001 GB 0113123
(43) Date of publication of application: 04.12.2002
(73) Proprietor: AEA Technology plc, Didcot, Oxfordshire OX11 0QJ (GB); Sula Systems Limited, Wotton-under-Edge, Gloucestershire GL12 7AE (GB)
(72) Inventor: Lewis, Simon David, Wrexham LL14 0DF (GB); Humphries, Martin Edward, Bristol BS10 6LX (GB)
(74) Representative: Talbot-Ponsonby, Clare Josephine

(56) References cited:
- EP-A- 0 469 651
- EP-A- 0 668 491
- GB-A- 1 604 411
- US-A- 3 985 209
- US-A- 4 850 719
- US-A- 5 030 016
- US-A- 5 094 551

## Description

The invention relates to a mechanical mechanism for applying force with force amplification which has particular application for providing an adjustable pre-load to a ball or like roller-element bearing.

Roller element bearings arranged in pairs, one opposing the other, are widely used where there is a requirement for the rotating member to accommodate axial or thrust loads as well as radial loads. Examples are found in the bearings for road wheels of vehicles. Preload is necessary for such bearings to provide the required resistance to axial or thrust loads, but pre-load also imparts more friction. Too much pre-load can cause bearings to fail early, whereas too little pre-load may permit too much play (manifested as wobble in the case of wheels) which can also reduce the life of the bearing. For bearings used in space craft, with which the present invention is particularly concerned, there is an additional requirement for the bearings ideally to be preloaded to provide acceptable stiffness to resist launch vibrations and to prevent vibration-induced bearing or lubricant damage. This function is conveniently provided by an adjustable pre-load which can be set to a high value which increases stiffness and protects the bearing during vibration..

A number of arrangements have been proposed in the prior art for providing adjustable pre-load and for dealing with the problem of releasably locking a bearing in a space craft. Examples are patent specifications U.S. 5488871, U.S. 4850719, U.S. RE34310, U.S. 5094551 for adjustable pre-load generally, and U.S. 3985209, U.S. 5030016 which relate to locking bearings for launch in space craft.

Problems, particularly for a space craft application, are presented by the requirements for compactness, a high force maximum pre-load, which can be maintained and removed with minimum energy requirements, subsequent adjustment of operating pre-load for optimum performance, maintenance of a uniform pressure distribution around the bearing, and no loss of bearing alignment or radial stiffness.

It is an object of the present invention to provide a mechanical mechanism for applying force with force amplification which, in its application for providing adjustable pre-load in a bearing, addresses these problems.

The invention provides in one of its aspects, a mechanical mechanism for applying force with force amplification to tend to change the separation between a first abutment member and a second abutment member, which mechanism comprises an actuator member, at least one link arm connected at one end to the actuator member and at the other end to the first abutment member, at least one other link arm connected at one end to the actuator member and at the other end to the second abutment member, and means for applying a force tending to move the actuator member relative to the first and second abutment members so as to change the angular orientations of the link arms relative to the abutment members to which they are connected and thereby apply a force tending to change the separation of the first and second abutment members, movement of the actuator member to change the said angular orientations of the link arms being greater than the corresponding change in separation of the abutment members so that the applied force is amplified by the link arms.

Preferably, the actuator member is located between, preferably substantially mid way between, the first abutment member and the second abutment member.

To provide stability, the first abutment member and the second abutment member are preferably connected together by a connection arm shaped to permit some change in separation between the first and second abutment members but to resist relative movement in any other direction of the first and second abutment members.

Preferably, a stop limits angular movement of the link arms in one sense to a position just beyond that corresponding, in the case where the actuator member is between the first and second abutment members, to maximum separation of the first and second abutment members, whereby the link arms can be caused to toggle into that position of near maximum separation, angular movement of the link arms in the opposite sense being not so limited.

In the case where the actuator member is not between the first and second abutment members, the stop limits angular movement of the link arms in one sense to a position just beyond that corresponding to minimum separation of the first and second abutment members, whereby the link arms can be caused to toggle into that position of near minimum separation, angular movement of the link arms in the opposite sense being not so limited.

To provide stability, the link arms are in the form of plate-like webs extending between the first and second abutment members, each plate-like web engaging and being attached to a respective abutment member along the length of an edge of the web, thereby confining to a single plane the change in the angular orientations of the link arms relative to the abutment members to which they are connected.

In particular for use in providing pre-load to a bearing, the first and second abutment members preferably comprise coaxially arranged annular rings and there are at least two pairs of said link arms connected between them and the actuator member. In this arrangement the actuator member preferably comprises an annular ring between the first and second abutment members and coaxial therewith, and the link arms are in the form of plate-like webs, the plane of the plate-like webs lying in radially extending planes containing the axis defined by the annular rings of the actuator member and the first and second abutment members.

Preferably, the first and second abutment members are connected together by at least two connection arms as aforesaid, the connection arms extending through slots in the actuator member, which slots are dimensioned to permit the required movement of the actuator member relative to the first and second abutment members, the connection arms each comprising a first rigid portion extending parallel to the axis and fixedly attached to the first abutment member, a second rigid portion extending parallel to the axis but circumferentially displaced from the first portion and fixedly attached to the second abutment member, and a third relatively flexible portion extending transverse to the axis and fixedly attached to and joining the first portion and the second portion.

To assist in maintaining axial alignment of the annular first and second abutment members, the connection arms have a substantial radial extent.

For the application of driving force, a motor mounted on one of the abutment members is connected to apply drive force to the actuator member so as to tend to impart a rotational movement of the actuator member about the axis relative to the abutment members. A drive shaft of the motor is conveniently located in an aperture in the other of the abutment members and drive force to the actuator member is imparted from rotation of the drive shaft via a cam and cam follower surface.

The invention provides, in another of its aspects, a ball or like roller-element bearing comprising an inner race assembly having first and second inner raceways, an outer race assembly having first and second outer raceways axially and radially aligned with respectively said first and second inner raceways, multiple roller-elements positioned between said first inner raceway and said first outer raceway and between said second inner raceway and said second outer raceway, a mechanical mechanism for applying an adjustable pre-load to the bearing, which mechanism comprises a first abutment member and a second abutment member arranged to engage in operation against a respective first raceway and a second raceway so that the magnitude of the pre-load is determined by the magnitude of a force tending to change the separation of the first abutment member and the second abutment member, an actuator member, at least one link arm connected at one end to the actuator member and at the other end to the first abutment member, at least one other link arm connected at one end to the actuator member and at the other end to the second abutment member, and means for applying a force tending to move the actuator member relative to the first and second abutment members so as to change the angular orientations of the link arms relative to the abutment members to which they are connected and thereby apply a force tending to change the separation of the first and second abutment members, movement of the actuator member to change the said angular orientations of the link arms being greater than the corresponding change in separation of the abutment members so that the applied force is amplified by the link arms.

A specific construction of mechanism and bearings embodying the invention will now be described by way of example and with reference to the drawings filed herewith, in which:
Figure 1 is a perspective view of the mechanism,
Figure 2 is a plan view of the mechanism,
Figure 3 is a sectional view of the mechanism taken on the line A-A of Figure 2,
Figure 4 is a sectional view of the mechanism taken on the line C-C of Figure 2,
Figure 5 is a part sectional view of a bearing in a back-to-back arrangement incorporating a mechanism similar to that shown in Figures 1-4, and
Figure 6 is a part sectional view of a bearing in a face-to-face arrangement incorporating a mechanism similar to that shown in Figures 1-4.

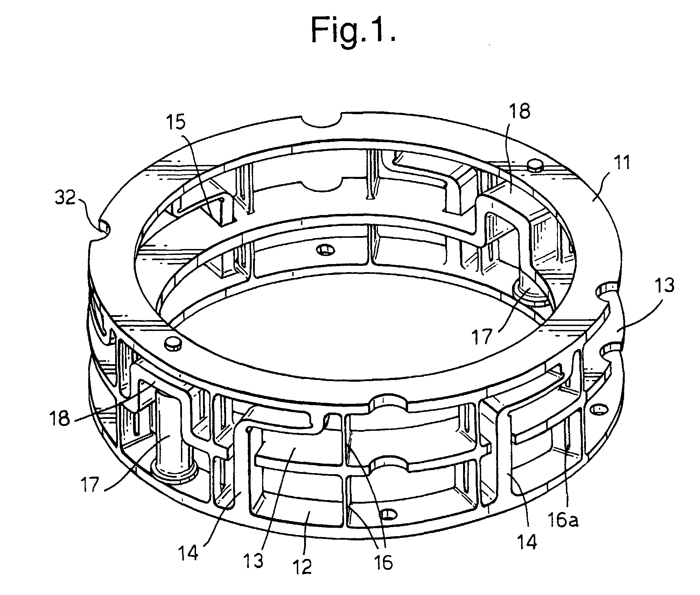

Referring to Figure 1, the mechanism comprises an annular upper thrust ring 11, a coaxial, annular lower thrust ring 12 and an actuator ring 13 positioned mid-way between the upper and lower thrust rings 11, 12 and coaxial with them. The upper thrust ring 11 and the lower thrust ring 12 are joined together by four equispaced suspension blades 14. Each suspension blade comprises a substantially rigid pillar section 14a extending parallel to the axis of the thrust rings from the lower thrust ring 12 through a slot 15 in the actuator ring 13; a corresponding substantially rigid pillar section 14b extending parallel to the axis of the thrust rings from the upper thrust ring 11 towards the lower thrust ring 12, but circumferentially displaced relative to the location of the pillar section 14a; and a relatively flexible section 14c extending parallel with the plane of the thrust rings and the actuator ring and connecting together the respective pillar sections. The pillar sections 14b, 14a are rigidly fixed to their respective thrust rings 11, 12 and the relatively flexible section 14c is also rigidly fixed to the pillar sections. While the three sections of the suspension blades 14 may be fabricated separately and joined together and to the respective thrust rings by welding or other means of attachment, it is best if they are made as a unitary structure.

The suspension blades 14 have a radial extent equal to that of the thrust rings 11 and 12 and their configuration has the effect of permitting relative movement between the upper thrust ring 11 and the lower thrust ring 12 in an axial direction, but resisting any relative movement in any other direction. This imparts radial rigidity to the mechanism. In particular, where the lower thrust ring 12 is attached to the fixed part of the bearing structure, the arrangement provides high radial stiffness at the upper thrust ring 11.

The actuator ring 13 has a greater radial extent than the thrust rings 11 and 12 in order to provide for the slots 15 through which the suspension blades 14 extend. The slots 15 have to be wide enough to permit the full extent required of rotational movement of the actuator ring 13 relative to the thrust rings 11 and 12, as discussed more fully below.

The relative axial position of the thrust rings 11 and 12 is defined by a set of multiple thin axial structural elements referred to as flex strut elements 16. The flex strut elements 16 are arranged in pairs, of which there are twelve in this example. Each pair of flex strut elements 16 provides a corresponding pair of opposed link arms between the actuator ring 13 and the upper thrust ring 11 and lower thrust ring 12 respectively. The plate-like web form of the flex strut elements 16 and their fixed attachment along the full radial extent of their contact with the actuator member 13 and the respective thrust ring 11 or 12 provides further radial rigidity to the structure.

It will be appreciated that rotation of the actuator ring 13 relative to the thrust rings 11 and 12, will, through a lever arm action of the flex strut elements 16, apply a force tending to alter the axial separation between upper thrust ring 11 and lower thrust ring 12. The rotational position of actuator ring 13 corresponding with the flex strut elements 16 in each pair being axially aligned corresponds with maximum axial separation of upper thrust ring 11 from lower thrust ring 12. For applying a bearing pre-load, the mechanism is dimensioned so that the required maximum pre-load force is applied by the flex strut elements 16 when in this "centre" position. A stop which allows relative rotational movement of the actuator ring 13 in one sense to a position just beyond this "centre" position will provide an over-centre toggle effect, self locking the mechanism in the maximum pre-load condition. Greater relative rotational movement in the opposite sense, once past the "centre" position, is permitted and thus can be set at a chosen level of pre-load less than the maximum. The required "stops" are conveniently provided by appropriate dimensioning of the slots 15 in the actuator ring 13. The "stop" action is provided, in one sense, by the engagement of one side of the slots 15 with the associated pillars of the suspension blades 14 and, in the other sense, by the engagement of the other side of the slots 15 with the pillars.

Each flex strut element 16 is formed with a central rib 16a to provide resistance against buckling of the flex strut element.

It is a particular advantage of the mechanism of this example that the mechanism can be fabricated from a single piece of material. In this way the action of the multiple flex strut elements 16 can be geometrically synchronised to the precision necessary for effective application of bearing pre-load. The recommended material is titanium alloy that has a high strength to stiffness ratio, is thermally well matched to the bearing steel and has a relatively low density. It also has reasonable fatigue properties.

Drive for the actuator ring 13 is provided in this example by a pair of primary and redundant piezoelectric motors 17 mounted diametrically opposite one another on the lower thrust ring 12. Space to accommodate the motors 17 is provided by integral "n" form humps 18 in the actuator ring 13. The drive shaft of motors 17 extends through an aperture in the humps 18 and into a bearing hole 19 in the upper thrust ring 11. A cam surface (not shown) provided on each of the drive shafts of the motors 17 cooperates with a cam follower surface appropriately formed in each of the apertures of the humps 18 so that rotation of the drive shafts causes a rotational movement of the actuator ring 13 relative to the thrust rings 11 and 12.

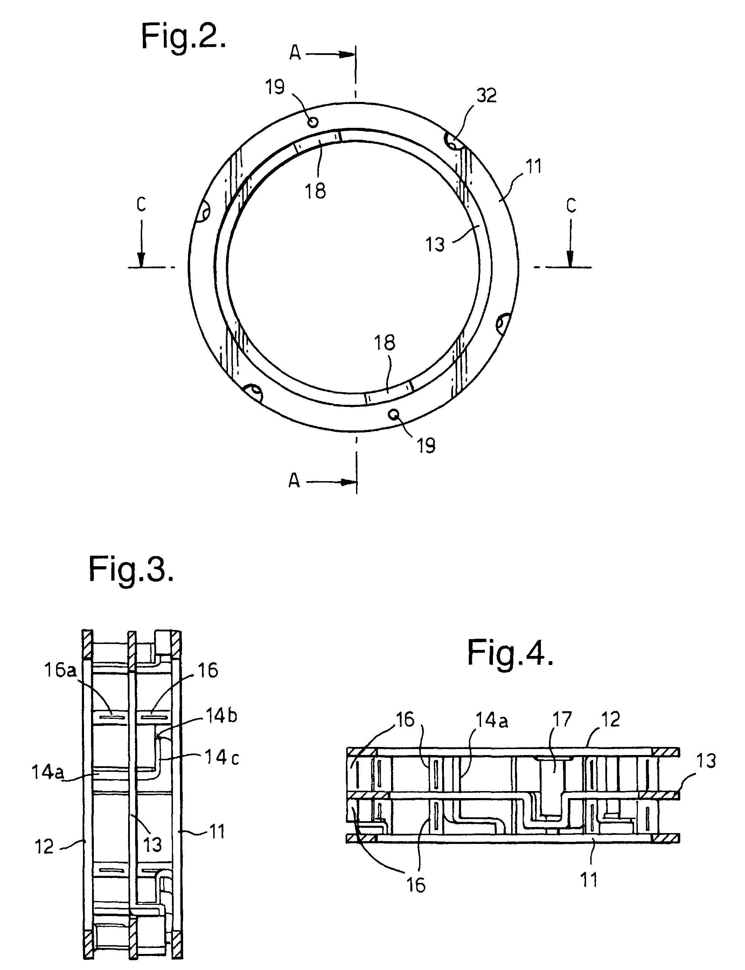

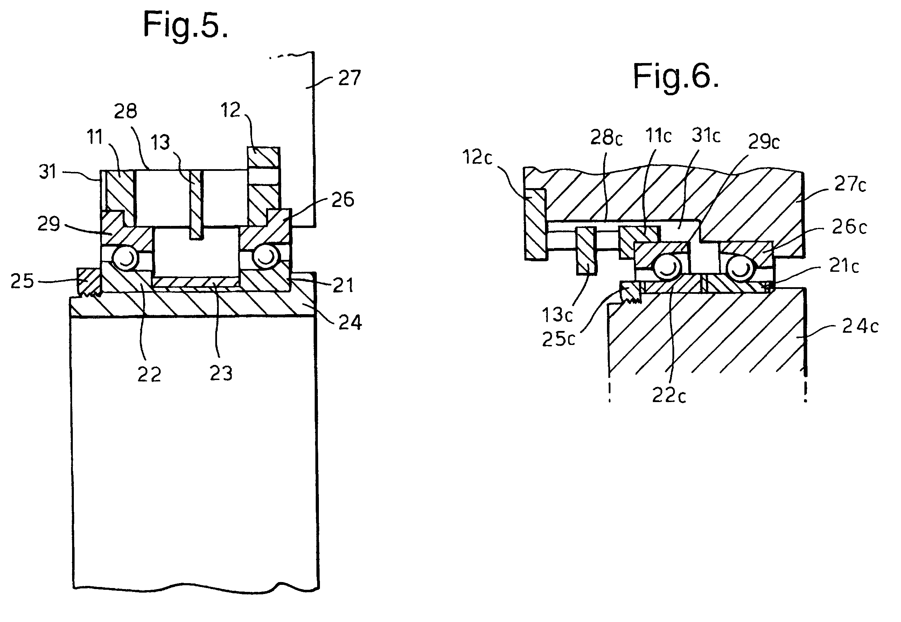

Figure 5 illustrates how the mechanism is used for applying pre-load to a back-to-back bearing configuration. Referring to Figure 5, a first inner raceway 21 and a second inner raceway 22 are fixedly mounted with a fixed separation defined by spacer 23 on a shaft 24. The inner raceways are clamped in position on the shaft 24 by a nut 25. A first outer raceway 26 is provided with a flange by which it is engaged by a "lower" thrust ring 12 of a pre-load mechanism of the type shown in Figures 1-4 (not shown in full detail in Figure 5) and secured, along with the lower thrust ring 12, to a fixed, stator, mounting 27.

"Upper" thrust ring 11 of the mechanism is received in (but not radially located by) a bore 28 in the mounting 27. Upper thrust ring 11 and second outer raceway 29 are both flanged, with the flanges interengaging so that the spacing between the lower thrust ring 12 and upper thrust ring 11 define the spacing between the outer raceways 26 and 29 and the compressive forces exerted by the flex strut elements 16 define the pre-load on the bearing. The necessary axial freedom of movement for the upper thrust ring 11 is provided by a small gap at 31 between the upper thrust ring 11 and the shoulder formed by the end of the bore 28 in which it is received. Projections (not shown) in the wall of the bore 28 may be provided to co-operate with cut outs 32 on the upper thrust ring 11 to further stabilise the upper thrust ring 11 against rotational movement.

Figure 6 illustrates an arrangement for using the mechanism for applying pre-load to a bearing in face-to-face configuration. Components corresponding to those shown in Figure 5 are referenced with the same reference numerals, distinguished by the letter "c". "Lower" thrust ring 12c and first outer raceway 26c are fixedly secured in the stator mounting 27c, but spaced apart for the face-to-face configuration. "Upper" thrust ring 11c locates and applies bearing pre-load to second outer raceway 29c in a manner which corresponds to that shown in Figure 5, but with load applied in the opposite direction.

The use of a flexural system provided by the suspension blades 14 for supporting the upper thrust ring 11 and thereby for mounting a bearing, makes it possible to measure the pre-load using conventional strain gauges or strain sensitive films at the suspension blades 14. The level of bending strain in the suspension blades 14 is directly proportional to the pre-load set. Thus, by monitoring the output of the strain detection system, the bearing pre-load is effectively monitored. This feedback information can be used in controlling the motors 17 to adjust the pre-load and, it will be appreciated, such active/adaptive control of bearing pre-load can be provided with a closed (or openable) loop feedback system.

In operation, for a bearing application in a spacecraft, the mechanism is activated to toggle the flex strut elements 16 over-centre, that is beyond the maximum preload "top-dead-centre" position to a high preload position which protects the bearing against launch vibration damage. In this condition, power supply to the drive motors 17 can be switched off once the flex strut elements 16 have moved over-centre. Once in orbit, appropriate activation of either the prime or redundant drive motors 17 to apply a modest torque to the actuator ring 13 drives the flex strut elements 16 out of their over-centre state into an optimum operational drive linkage state. This releases the high pre-load and then an adjustable pre-load can be set by appropriate movement of the actuator ring 13. Provision (not shown) of a significant passive detent in the actuator system would enable power to be switched off when the desired operating pre-load is reached and thus power only used during pre-load change operations.

However, even if such a passive detent in the actuator system is not provided, the required holding forces and torques in the main operating pre-load regime are relatively low and require very little power.

The design of the mechanism of the foregoing example, capable of manufacture as a monolithic construction, provides a number of advantages including:
(i) low-cost/low complexity requiring virtually no assembly or adjustments other than those associated with normal bearing sets,
(ii) reliable operation using multiple drive motors with no synchronisation requirement and no additional bearings,
(iii) high ratio transmission with no backlash, no coulomb friction/stiction and no wear,
(iv) distributed structural redundancy.

The invention is not restricted to the details of the foregoing examples. For instance drive to the actuator ring 13 need not necessarily be provided by piezoelectric motors but may be provided by any other suitable form of drive mechanism such as piezo-ceramic bi-morph blades, magneto strictive or piezo inchworm devices and pseudo-hydraulic devices. For applications that only require two switchable pre-load states (i.e. high initial pre-load and nominal pre-load) shape memory actuators and paraffin devices would also be suitable.

The location of the actuator ring 13 between the upper thrust ring 11 and the lowerer thrust ring 12 is most convenient for the applications described. However, it will be appreciated that the actuator ring could be positioned so that one of the thrust rings was between the actuator ring and the other thrust ring. This would introduce an added complexity in a shaping the flex strut elements to form the link arms between the actuator ring and the remote thrust ring. It would also mean the length of the link arms to one thrust ring would be different from that of the link arms to the other thrust ring. Further, the centre position of an over-centre toggle action of the link arms would correspond with the position of minimum separation between the thrust rings rather than the maximum.

Reference has been made in the description to "upper" and "lower" thrust rings for convenience to distinguish the respective thrust rings in their locations as seen in Figure 1. It will be appreciated, and is evident from Figure 5 and Figure 6, that the relative location of the thrust rings will depend upon the orientation when in use of the bearing, or other apparatus in which the mechanism is used.

Application of the mechanism for applying pre-load to a bearing for a space craft has been described, but it will be appreciated that provision of an adjustable pre-load has usefulness for bearings for a wide range of other applications.

## Claims

1. A mechanical mechanism for applying force with force amplification to tend to change the axial separation between a first abutment member (11) in the form of an annular ring and a second abutment member (12) also in the form of an annular ring coaxial with the first abutment member, which mechanism comprises an actuator member (13), at least two pairs of link arms (16) circumferentially spaced apart from one another, one link arm (16) of each pair being connected at one end to the actuator member and at the other end to the first abutment member (11), the respective other link arm (16) of each pair of link arms being connected at one end to the actuator member (13) and at the other end to the second abutment member (12), and means for applying a force (17) tending to move the actuator member (13) relative to the first (11) and second (12) abutment members so as to change the angular orientations of the link arms (16) relative to the abutment members to which they are connected and thereby apply a force tending to change the separation of the first (11) and second (12) abutment members, movement of the actuator member (13) to change the said angular orientations of the link arms (16) being greater than the corresponding change in separation of the abutment members so that the applied force is amplified by the link arms (16).

2. A mechanical mechanism as claimed in claim 1, wherein the actuator member (13) is located between the first abutment member (11) and the second abutment member (12).

3. A mechanical mechanism as claimed in claim 2, wherein the actuator member (13) is located substantially mid way between the first abutment (11) member and the second (12) abutment member.

4. A mechanical mechanism as claimed in any of the preceding claims, wherein, to provide stability, the first abutment member (11) and the second abutment member (12) are connected together by a connection arm (14) shaped to permit some change in separation between the first (11) and second (12) abutment members but to resist relative movement in any other direction of the first and second abutment members.

5. A mechanical mechanism as claimed in any of the preceding claims, wherein a stop limits angular movement of the link arms in one sense to a position just beyond that corresponding, in the case where the actuator member (13) is between the first (11) and second (12) abutment members, to maximum separation of the first and second abutment members, whereby the link arms (16) can be caused to toggle into that position of near maximum separation, angular movement of the link arms in the opposite sense being not so limited.

6. A mechanical mechanism as claimed in any of claims 1 to 4, wherein a stop limits angular movement of the link arms in one sense to a position just beyond that corresponding, in the case where the actuator member (13) is not between the first (11) and second (12) abutment members, to minimum separation of the first and second abutment members, whereby the link arms (16) can be caused to toggle into that position of near minimum separation, angular movement of the link arms in the opposite sense being not so limited.

7. A mechanical mechanism as claimed in any of the preceding claims, wherein the link arms (16) are in the form of plate-like webs extending between the first (11) and second (12) abutment members, each plate-like web engaging and being attached to a respective abutment member (11;12) along the length of an edge of the web, thereby confining to a single plane the change in the angular orientations of the link arms relative to the abutment members to which they are connected.

8. A mechanical mechanism as claimed in claim 7, wherein the plate-like webs are formed with a reinforcing rib (16a) extending across the plate-like webs, the ends of the ribs being spaced from the edges of the web to which they are transverse and which edges are attached to the abutment member (11;12) and the actuator member (13) respectively, thereby to permit the webs to bend at these edge regions.

9. A mechanical mechanism as claimed in any of the preceding claims, wherein the actuator member (13) comprises an annular ring between the first (11) and second (12) abutment members and coaxial therewith.

10. A mechanical mechanism as claimed in claim 9, wherein the link arms (16) are in the form of plate-like webs as claimed in claim 7 or claim 8, the plane of the plate-like webs lying in radially extending planes containing the axis defined by the annular rings of the actuator (13) member and the first (11) and second (12) abutment members.

11. A mechanical mechanism as claimed in claim 10, wherein the first (11) and second (12) abutment members are connected together by at least two connection arms (14) as claimed in claim 4, the connection arms extending through slots (15) in the actuator member (13), which slots are dimensioned to permit the required movement of the actuator member (13) relative to the first (11) and second (12) abutment members, the connection arms (14) each comprising a first rigid portion (14b) extending parallel to the axis and fixedly attached to the first abutment member (11), a second rigid portion (14a) extending parallel to the axis but circumferentially displaced from the first portion and fixedly attached to the second abutment member (12), and a third relatively flexible portion (14c) extending transverse to the axis and fixedly attached to and joining the first portion (14b) and the second portion (14a).

12. A mechanical mechanism as claimed in claim 11, wherein the connection arms (14) have a substantial radial extent to assist in maintaining radial alignment of the annular first (11) and second (12) abutment members.

13. A mechanical mechanism as claimed in any one of claims 9 to 12, wherein a motor (17) mounted on or close by one of the abutment members (12) is connected to apply drive force to the actuator member (13) so as to tend to impart a rotational movement of the actuator member (13) about the axis relative to the abutment members.

14. A mechanical mechanism as claimed in claim 13, wherein a drive shaft (19) of the motor is located in an aperture in the other of the abutment members (11) and drive force to the actuator member (13) is imparted from rotation of the drive shaft via a cam and cam follower surface (18).

15. A ball or like roller-element bearing in which pre-load is applied by a mechanism as claimed in any of the preceding claims.

16. A ball or like roller-element bearing comprising an inner race assembly having first (21) and second (22) inner raceways, an outer race assembly having first (26) and second (29) outer raceways axially and radially aligned with respectively said first and second inner raceways, multiple roller-elements positioned between said first inner raceway and said first outer raceway and between said second inner raceway and said second outer raceway, a mechanical mechanism for applying an adjustable pre-load to the bearing, which mechanism comprises a first abutment member (11) and a second abutment (12) member arranged to engage in operation against a respective first raceway (29) and a second raceway (26) so that the magnitude of the pre-load is determined by the magnitude of a force tending to change the separation of the first abutment member (11) and the second abutment member (12), an actuator member (13), at least one link arm (16) connected at one end to the actuator member (13) and at the other end to the first abutment member (11), at least one other link arm (16) connected at one end to the actuator member (13) and at the other end to the second abutment member (12), and means (17) for applying a force tending to move the actuator member (13) relative to the first (11) and second (12) abutment members so as to change the angular orientations of the link arms (16) relative to the abutment (11;12) members to which they are connected and thereby apply a force tending to change the separation of the first (11) and second (12) abutment members, movement of the actuator member (13) to change the said angular orientations of the link arms (16) being greater than the corresponding change in separation of the abutment members (11;12) so that the applied force is amplified by the link arms (16).

## Patentansprüche

1. Mechanischer Mechanismus zum Ausüben einer Kraft mit Kraftverstärkung mit der Neigung bzw. Tendenz den axialen Abstand zwischen einem ersten Widerlagerelement (11) in Form eines Kreisrings und einem zweiten Widerlagerelement (12) ebenfalls in Form eines Kreisrings, das zu dem ersten Widerlagerelement koaxial ist, zu ändern, wobei der Mechanismus versehen ist mit einem Aktuatorelement (13), wenigstens zwei Paaren Zwischenverbindungsarme (16), die in Umfangsrichtung voneinander beabstandet sind, wobei ein Zwischenverbindungsarm (16) jedes Paars mit einem Ende mit dem Aktuatorelement (13) verbunden ist und mit dem anderen Ende mit dem ersten Widerlagerelement (11) verbunden ist und wobei der jeweils andere Zwischenverbindungsarm (16) jedes Paars Zwischenverbindungsarme mit einem Ende mit dem Aktuatorelement (13) verbunden ist und mit dem anderen Ende mit dem zweiten Widerlagerelement (12) verbunden ist, und Mitteln, um eine Kraft (17) auszuüben, die bestrebt ist, das Aktuatorelement (13) in Bezug auf das erste Widerlagerelement (11) und das zweite Widerlagerelement (12) zu bewegen, um so die Winkelorientierungen der Zwischenverbindungsarme (16) relativ zu den Widerlagerelementen, mit denen sie verbunden sind, zu ändern, und dadurch eine Kraft auszuüben, die bestrebt ist, den Abstand zwischen dem ersten Widerlagerelement (11) und dem zweiten Widerlagerelement (12) zu ändern, wobei eine Bewegung des Aktuatorelements (13), um die Winkelorientierungen der Zwischenverbindungsarme (16) zu ändern, größer ist als die entsprechende Änderung des Abstandes der Widerlagerelemente, so dass die ausgeübte Kraft durch die Zwischenverbindungsarme (16) verstärkt wird.

2. Mechanischer Mechanismus nach Anspruch 1, bei dem sich das Aktuatorelement (13) zwischen dem ersten Widerlagerelement (11) und dem zweiten Widerlagerelement (12) befindet.

3. Mechanischer Mechanismus nach Anspruch 2, bei dem sich das Aktuatorelement (13) im Wesentlichen in der Mitte zwischen dem ersten Widerlagerelement (11) und dem zweiten Widerlagerelement (12) befindet.

4. Mechanischer Mechanismus nach einem der vorhergehenden Ansprüche, bei dem, um eine Stabilität zu schaffen, das erste Widerlagerelement (11) und das zweite Widerlagerelement (12) durch einen Verbindungsarm (14) miteinander verbunden sind, um eine geringe Änderung des Abstandes zwischen dem ersten Widerlagerelement (11) und dem zweiten Widerlagerelement (12) zu ermöglichen, jedoch eine Relativbewegung in irgendeiner anderen Richtung zwischen dem ersten und dem zweiten Widerlagerelement zu verhindern.

5. Mechanischer Mechanismus nach einem der vorhergehenden Ansprüche, bei dem ein Anschlag die Winkelbewegung der Zwischenverbindungsarme in einem Richtungssinn auf eine Position direkt jenseits derjenigen begrenzt, die in dem Fall, in dem sich das Aktuatorelement (13) zwischen dem ersten Widerlagerelement (11) und dem zweiten Widerlagerelement (12) befindet, der maximalen Trennung des ersten Widerlagerelements und des zweiten Widerlagerelements entspricht, wodurch die Zwischenverbindungsarme (16) dazu veranlasst werden können, sich in dieser Position in der Nähe des maximalen Abstandes zu fixieren, wobei eine Winkelbewegung der Zwischenverbindungsarme in dem entgegengesetzten Richtungssinn nicht auf diese Weise begrenzt ist.

6. Mechanischer Mechanismus nach einem der Ansprüche 1 bis 4, bei dem ein Anschlag die Winkelbewegung der Zwischenverbindungsarme in einem Richtungssinn auf eine Position direkt jenseits derjenigen begrenzt, die in dem Fall, in dem sich das Aktuatorelement (13) nicht zwischen dem ersten Widerlagerelement (11) und dem zweiten Widerlagerelement (12) befindet, dem minimalen Abstand zwischen dem ersten und dem zweiten Widerlagerelement entspricht, wodurch die Zwischenverbindungsarme (16) dazu veranlasst werden können, sich in dieser Position in der Nähe des minimalen Abstandes zu fixieren, wobei eine Winkelbewegung der Zwischenverbindungsarme in dem entgegengesetzten Richtungssinn nicht auf diese Weise begrenzt ist.

7. Mechanischer Mechanismus nach einem der vorhergehenden Ansprüche, bei dem die Zwischenverbindungsarme (16) die Form plattenähnlicher Rippen haben, die sich zwischen dem ersten Widerlagerelement (11) und dem zweiten Widerlagerelement (12) erstrecken, wobei jede plattenähnliche Rippe mit einem entsprechenden Widerlagerelement (11; 12) längs einer Kante der Rippe in Eingriff und daran befestigt ist, wodurch die Änderung der Winkelorientierungen der Zwischenverbindungsarme relativ zu den Widerlagerelementen, mit denen sie verbunden sind, auf eine einzige Ebene eingeschränkt wird.

8. Mechanischer Mechanismus nach Anspruch 7, bei dem die plattenähnlichen Rippen mit einem Verstärkungssteg (16a) versehen sind, der sich über die plattenähnlichen Rippen erstreckt, wobei die Enden der Stege von den Kanten der Rippe, zu der sie quer verlaufen, beabstandet sind und wobei die Kanten an dem Widerlagerelement (11; 12) bzw. an dem Aktuatorelement (13) befestigt sind, wodurch den Rippen ermöglicht wird, sich an diesen Kantenbereichen zu biegen.

9. Mechanischer Mechanismus nach einem der vorhergehenden Ansprüche, bei dem das Aktuatorelement (13) zwischen dem ersten Widerlagerelement (11) und dem zweiten Widerlagerelement (12) einen zu ihnen koaxialen Kreisring umfasst.

10. Mechanischer Mechanismus nach Anspruch 9, bei dem die Zwischenverbindungsarme (16) die Form plattenähnlicher Rippen nach Anspruch 7 oder Anspruch 8 haben, wobei die Ebene der plattenähnlichen Rippen in radial verlaufenden Ebenen liegen, die die Achsen enthalten, die durch die kreisförmigen Elemente des Aktuatorelements (13), des ersten Widerlagerelements (11) und des zweiten Widerlagerelements (12) definiert sind.

11. Mechanischer Mechanismus nach Anspruch 10, bei dem das erste Widerlagerelement (11) und das zweite Widerlagerelement (12) durch wenigstens zwei Verbindungsarme (14) nach Anspruch 4 miteinander verbunden sind, wobei die Verbindungsarme durch Schlitze (15) in dem Aktuatorelement (13) verlaufen, wobei die Schlitze so bemessen sind, dass sie die erforderliche Bewegung des Aktuatorelements (13) in Bezug auf das erste Widerlagerelement (11) und das zweite Widerlagerelement (12) ermöglichen, wobei die Verbindungsarme (14) jeweils einen ersten starren Abschnitt (14b), der sich parallel zu der Achse erstreckt und an dem ersten Widerlagerelement (11) fest angebracht ist, einen zweiten starren Abschnitt (14a), der sich parallel zu der Achse erstreckt, jedoch in Umfangsrichtung von dem ersten Abschnitt beabstandet ist und an dem zweiten Widerlagerelement (12) fest angebracht ist, und einen dritten verhältnismäßig flexiblen Abschnitt (14c), der sich quer zu der Achse erstreckt und an dem ersten Abschnitt (14b) sowie an dem zweiten Abschnitt (14a) fest angebracht ist und diese verbindet, umfasst.

12. Mechanischer Mechanismus nach Anspruch 11, bei dem die Verbindungsarme (14) eine im Wesentlichen radiale Erstreckung haben, um die Aufrechterhaltung der radialen Ausrichtung des ersten ringförmigen Widerlagerelements (11) und des zweiten ringförmigen Widerlagerelements (12) zu unterstützen.

13. Mechanischer Mechanismus nach einem der Ansprüche 9 bis 12, bei dem ein Motor (17), der an einem der Widerlagerelemente (12) oder in dessen Nähe angebracht ist, so verbunden ist, dass er eine Antriebskraft auf das Aktuatorelement (13) ausübt, um die Beaufschlagung des Aktuatorelements (13) mit einer Drehbewegung um die Achse relativ zu den Widerlagerelementen zu begünstigen.

14. Mechanischer Mechanismus nach Anspruch 13, bei der sich eine Antriebswelle (19) des Motors in einer Öffnung im anderen der Widerlagerelemente (11) befindet und die Antriebskraft ausgehend von der Drehung der Antriebswelle über einen Nocken und eine Nockenfolgerfläche (18) auf das Aktuatorelement (13) ausgeübt wird.

15. Kugellager oder Lager mit ähnlichen Wälzelementen, in dem durch einen Mechanismus nach einem der vorhergehenden Ansprüche eine Vorbelastung ausgeübt wird.

16. Kugellager oder Lager mit ähnlichen Wälzelementen, das eine innere Laufringbaueinheit mit einer ersten inneren Laufbahn (21) und einer zweiten inneren Laufbahn (22), eine äußere Laufringbaueinheit mit einer ersten äußeren Laufbahn (26) und einer zweiten äußeren Laufbahn (29), die axial und radial auf die erste bzw. die zweite innere Laufbahn ausgerichtet sind, mehrere Wälzelemente, die zwischen der ersten inneren Laufbahn und der ersten äußeren Laufbahn sowie zwischen der zweiten inneren Laufbahn und der zweiten äußeren Laufbahn angeordnet sind, und einen mechanischen Mechanismus, um auf das Lager eine einstellbare Vorbelastung auszuüben, umfasst, wobei der Mechanismus versehen ist mit einem ersten Widerlagerelement (11) und einem zweiten Widerlagerelement (12), die so beschaffen sind, dass sie im Betrieb mit der ersten Laufbahn (29) bzw. mit der zweiten Laufbahn (26) in Eingriff gelangen, so dass die Größe der Vorbelastung durch die Größe einer Kraft bestimmt ist, die bestrebt ist, den Abstand zwischen dem ersten Widerlagerelement (11) und dem zweiten Widerlagerelement (12) zu ändern, einem Aktuatorelement (13), wenigstens einem Zwischenverbindungsarm (16), der mit einem Ende mit dem Aktuatorelement (13) und mit dem anderen Ende mit dem ersten Widerlagerelement (11) verbunden ist, wenigstens einem weiteren Zwischenverbindungsarm (16), der mit einem Ende mit dem Aktuatorelement (13) und mit dem anderen Ende mit dem zweiten Widerlagerelement (12) verbunden ist, und Mitteln (17), um eine Kraft auszuüben, die bestrebt ist, das Aktuatorelement (13) relativ zu dem ersten Widerlagerelement (11) und dem zweiten Widerlagerelement (12) zu bewegen, um so die Winkelorientierungen der Zwischenverbindungsarme (16) relativ zu den Widerlagerelementen (11; 12), mit denen sie verbunden sind, zu ändern, und um dadurch eine Kraft auszuüben, die bestrebt ist, die Trennung des ersten Widerlagerelements (11) und des zweiten Widerlagerelements (12) zu ändern, wobei eine Bewegung des Aktuatorelements (13), um die Winkelorientierungen der Zwischenverbindungsarme (16) zu ändern, größer ist als die entsprechende Änderung des Abstandes der Widerlagerelemente (11; 12), so dass die ausgeübte Kraft durch die Zwischenverbindungsarme (16) verstärkt wird.

## Revendications

1. Mécanisme mécanique permettant d'appliquer une force avec une amplification de force pour chercher à modifier la séparation axiale entre un premier élément de butée (11) ayant la forme d'un anneau, et un second élément de butée (12) ayant également la forme d'un anneau, co-axial avec le premier élément de butée, lequel mécanisme comprend un élément de commande (13), au moins deux paires de bras de liaison (16) espacées à distance l'une de l'autre sur la circonférence, un bras de liaison (16) de chaque paire étant connecté au niveau d'une extrémité à l'élément de commande (13) et au niveau de l'autre extrémité au premier élément de butée (11), l'autre bras de liaison respectif (16) de chaque paire de bras de liaison étant connecté au niveau d'une extrémité à l'élément de commande (13) et au niveau de l'autre extrémité au second élément de butée (12), et des moyens pour appliquer une force (17) ayant tendance à déplacer l'élément de commande (13) par rapport aux premier (11) et second (12) éléments de butée de manière à modifier les orientations angulaires des bras de laison (16) par rapport aux éléments de butée auxquels ils sont connectés, et de ce fait, de manière à appliquer une force ayant tendance à modifier la séparation des premier (11) et second (12) éléments de butées, le mouvement de l'élément de commande (13) pour modifier lesdites orientations angulaires des bras de liaison (16) étant plus important que la modification correspondante de la séparation des éléments de butée, de sorte que la force appliquée se trouve amplifiée par les bras de liaison (16).

2. Mécanisme mécanique selon la revendication 1, dans lequel l'élément de commande (13) est situé entre le premier élément de butée (11) et le second élément de butée (12).

3. Mécanisme mécanique selon la revendication 2, dans lequel l'élément de commande (13) est situé sensiblement à mi-chemin entre le premier élément de butée (11) et le second élément de butée(12).

4. Mécanisme mécanique selon l'une quelconque des revendications précédentes, dans lequel, pour fournir une stabilité, le premier élément de butée (11) et le second élément de butée (12) sont connectés ensemble par un bras de connexion (14) ayant une forme choisie pour permettre certaines modifications de la séparation entre les premier (11) et second (12) éléments de butée mais pour résister au mouvement relatif dans toute autre direction des premier et second éléments de butée.

5. Mécanisme mécanique selon l'une quelconque des revendications précédentes, dan lequel un arrêt limite le mouvement angulaire des bras de liaison dans un sens jusqu'à une position juste au-delà de celle correspondante, au cas où l'élément de commande (13) est situé entre les premier (11) et second (12) éléments de butée, pour obtenir une séparation maximale des premier et second éléments de butée, moyennant quoi les bras de liaison (16) peuvent être amenés à basculer dans cette position de séparation presque maximale, le mouvement angulaire des bras de liaison dans le sens opposé n'étant pas aussi limité.

6. Mécanisme mécanique selon l'une quelconque des revendications 1 à 4, dans lequel un arrêt limite le mouvement angulaire des bras de liaison dans un sens jusqu'à une position juste au-delà de celle correspondante, dans le cas où l'élément de commande (13) n'est pas situé entre les premier (11) et second (12) éléments de butée, pour obtenir une séparation maximale des premier et second éléments de butée, moyennant quoi les bras de liaison (16) peuvent être amenés à basculer dans cette position de séparation presque maximale, le mouvement angulaire des bras de liaison dans le sens opposé n'étant pas aussi limité.

7. Mécanisme mécanique selon l'une quelconque des revendications précédentes, dans lequel les bras de liaison (16) ont la forme de bandes ressemblant à des plaques s'étirant entre les premier (11) et second (12) éléments de butée, chaque bande en forme de plaque mettant en prise et étant attachée à un élément de butée respectif (11, 12) sur toute la longueur d'un bord de la bande, confinant ainsi à un seul plan la modification des orientations angulaires des bras de liaison par rapport aux éléments de butée auxquels ils sont connectés.

8. Mécanisme mécanique selon la revendication 7, dans lequel les bandes ressemblant à des plaques sont formées avec des nervures de renfort (16a) s'étirant sur les bandes en forme de plaques, les extrémités des nervures étant à une certaine distance des bords de la bande par rapport à laquelle ils sont en position transversale et lesquels bords étant respectivement fixés sur l'élément de butée (11 ; 12) et l'élément de commande (13), afin de permettre aux bandes de se plier au niveau de ces régions de bord.

9. Mécanisme mécanique selon l'une quelconque des revendications précédentes, dans lequel l'élément de commande (13) comprend un anneau entre les premier (11) et second (12) éléments de butée et qui est co-axial avec ceux-ci.

10. Mécanisme mécanique selon la revendication 9, dans lequel les bras de liaison (16) ont la forme de bandes ressemblant à des plaques comme revendiqué dans la revendication 7 ou la revendication 8, le plan des bandes en forme de plaques étant situé dans des plans s'étirant de manière radiale et comprenant l'axe défini par les anneaux de l'élément de commande (13) et les premier (11) et second (12) éléments de butée.

11. Mécanisme mécanique selon la revendication 10, dans lequel les premier (11) et second (12) éléments de butée sont connectés ensemble par au moins deux bras de connexion (14) comme revendiqué dans la revendication 4, les bras de connexion s'étirant à travers des encoches (15) dans l'élément de commande (13), lesquelles encoches sont dimensionnées de manière à permettre le mouvement requis de l'élément de commande (13) par rapport aux premier (11) et second (12) éléments de butée, les bras de connexion (14) comprenant chacun une première partie rigide (14b) s'étirant parallèlement à l'axe et attachée de manière fixe au premier élément de butée (11), une seconde partie rigide (14a) s'étirant parallèlement à l'axe mais déplacée de manière périphérique depuis la première partie et attachée de manière fixe au second élément de butée (12), et une troisième partie relativement flexible (14c) s'étirant transversalement à l'axe, attachée de manière fixe à et reliant la première partie (14b) et la deuxième partie (14a).

12. Mécanisme mécanique selon la revendication 11, dans lequel les bras de connexion (14) ont une portée sensiblement radiale afin d'aider à maintenir l'alignement radial des premier (11) et second (12) éléments de butée.

13. Mécanisme mécanique selon l'une quelconque des revendications 9 à 12, dans lequel un moteur (17) monté sur ou à proximité d'un des éléments de butée (12) est connecté de manière appliquer une force d'entraînement sur l'élément de commande (13) afin d'avoir tendance à fournir un mouvement rotatif de l'élément de commande (13) autour de l'axe relatif aux éléments de butée.

14. Mécanisme mécanique selon la revendication 13, dans lequel un arbre d'entraînement (19) du moteur est situé dans une ouverture dans l'autre des éléments de butée (11) et une force d'entraînement pour l'élément de commande (13) est fournie par la rotation de l'arbre d'entraiment via une came et une surface de galet de came (18) .

15. Bille ou roulement à élément de rouleau semblable, dans lequel une pré-charge est appliquée par un mécanisme tel que revendiqué dans l'une quelconque des revendications précédentes.

16. Bille ou roulement à élément de rouleau semblable comprenant un ensemble de course interne ayant des premier (21) et second (22) chemins de roulement internes, un ensemble de course externe ayant des premier (26) et second (29) chemins de roulement externes alignés de manière axiale et radiale sur, respectivement, lesdits premier et second chemins de roulement internes, des éléments de rouleaux multiples positionnés entres ledit premier chemin de roulement interne et ledit premier chemin de roulement externe et entre ledit second chemin de roulement interne et ledit second chemin de roulement externe, un mécanisme mécanique pour appliquer une pré-charge ajustable sur le roulement, lequel mécanisme comprend un premier élément de butée (11) et un second élément de butée (12) agencés de manière à venir en prise, lors de leur fonctionnement, contre respectivement un premier chemin de roulement (29) et un second chemin de roulement (26) de sorte que l'amplitude de la pré-charge soit déterminée par l'amplitude d'une force ayant tendance à modifier la séparation du premier élément de butée(11) et du second élément de butée(12), un élément de commande (13), au moins un bras de liaison (16) connecté au niveau d'une extrémité à l'élément de commande (13) et au niveau de l'autre extrémité au premier élément de butée (11), au moins un autre bras de liaison (16) connecté au niveau d'une extrémité à l'élément de commande (13) et au niveau de l'autre extrémité au second élément de butée (12), et des moyens (17) pour appliquer une force ayant tendance à déplacer l'élément de commande (13) par rapport aux premier (11) et second (12) éléments de butée, de manière à modifier les orientations angulaires des bras de liaison (16) par rapport aux éléments de butée (11 ; 12) auxquels ils sont connectés et ainsi de manière à appliquer une force ayant tendance à modifier la séparation des premier (11) et second (12) éléments de butée, le mouvement de l'élément de commande (13) pour modifier lesdites orientations angulaires des bras de liaison (16) étant plus important que la modification correspondante de la séparation des éléments de butée (11 ; 12), de sorte que la force appliquée se trouve amplifiée par les gras de liaison (16) .
